# EUROPEAN PATENT APPLICATION

(11) **EP 1 942 494 A1**
(43) Date of publication of application: **09.07.2008**
(21) Application number: 07124116.0
(22) Date of filing: 28.12.2007
(51) Int. Cl.: G11B 7/085

(54) **Optical pick-up unit and optical pick-up used in the optical pick-up unit**

(30) Priority: 29.12.2006 JP 2006356911
(71) Applicant: Mitsumi Electric Co., Ltd., Tama-Shi, Tokyo (JP)
(72) Inventor: Kirii, Atsushi Mitsumi Electric Co.,Ltd., Yamagata (JP); Sato, Keiichi c/o Mitsumi Electric Co.,Ltd, Yamagata (JP); Kikuchi, Atsushi c/o Mitsumi Electric Co.,Ltd, Yamagata (JP); Takahashi, Makoto Mitsumi Electric Co.,Ltd., Yamagata (JP)
(74) Representative: Solf, Alexander

(57) **Abstract**

An optical pick-up unit includes an optical pick-up for recording reproducing data to and from the optical disc, the optical pick-up being provided on a base frame so that the optical pick-up can move in a predetermined radial direction of the loaded optical disc; a stepping motor provided on the base frame; a lead screw rotated by the stepping motor and provided in parallel with the moving direction of the optical pick-up; first and second guide rods arranged on the base frame in parallel with the lead screw through a predetermined spacing there between for guiding an optical pick-up base of the optical pick-up in the moving direction of the pick-up; a rack spring having one end which is fixedly mounted on the pick-up base by a screw and the other end which is provided with an engaging portion which is in engagement with a groove of the lead screw so as to move the pick-up base in the moving direction of the pick-up in accordance with the rotation of the lead screw; and an abutment portion provided on the pick-up base so as to abut on the second guide rod, wherein the rack spring is configured so as to forcedly rotate the pick-up base about the first guide rod with its reaction force so that the abutment portion of the pick-up base abuts on the second guide rod with a predetermined load.

## Description

### BACKGROUND OF THE INVENTION

### Field of the Invention

This invention relates to an optical pick-up unit and an optical pick-up used in the optical pick-up unit, and more specifically relates to an optical pick-up unit used in an optical disc drive for reproducing data from or recording and reproducing data to and from an optical disc and an optical pick-up used in the optical pick-up unit.

### Description of Related Art

In an optical disc drive for driving a large capacity optical disc such as DVD and the like, since such an optical disc has a larger recording density as compared to CD-R and the like, it is necessary to move an optical pick-up at a high speed when a search operation or the like is carried out. Therefore, recently, as a moving mechanism used in an optical pick-up unit for moving the optical pick-up in a predetermined radial direction of an optical disc (normally, a longitudinal direction of an optical disc drive when viewed from a top thereof), a stepping motor is used as a means for rotating a lead screw to move the optical pick-up instead of a conventionally-used DC motor.

The lead screw is formed with an engaging groove (helical groove) for moving the optical pick-up in the radial direction of the optical pick-up with respect to the optical pick-up unit of an optical disc drive. The optical pick-up includes a pick-up base having a first end portion near the lead screw and a second end portion opposite to the first end portion, and a rack spring which is at one end portion thereof mounted on the pick-up base near the first end portion thereof. The rack spring has at the other end thereof an engaging portion which is engaged with the engaging groove of the lead screw. By rotating the lead screw with the stepping motor in a state that the engaging portion of the rack spring is in engagement with the engaging groove of the lead screw, it is possible to move the optical pick-up in the radial direction of the optical disc. One example of such an optical pick-up unit is shown in JP A 2002-367303.

The one end of the rack spring is fixedly mounted on the pick-up base with a fixing means such as a screw so that a load (spring pressure) is applied to the lead screw through the engaging portion of the rack spring.

In the optical pick-up unit, a pair of guide rods are provided for guiding the pick-up base so that the optical-pick-up can be moved in parallel with the lead screw. The pairs of guide rods are arranged in parallel with each other through a predetermined spacing. The guide rods includes a main guide rod arranged near the lead screw and a sub guide rod arranged at the second end portion of the pick-up base. In this regard, it is to be noted that a part of a base frame of the optical pick-up unit may be used instead of the sub guide rod.

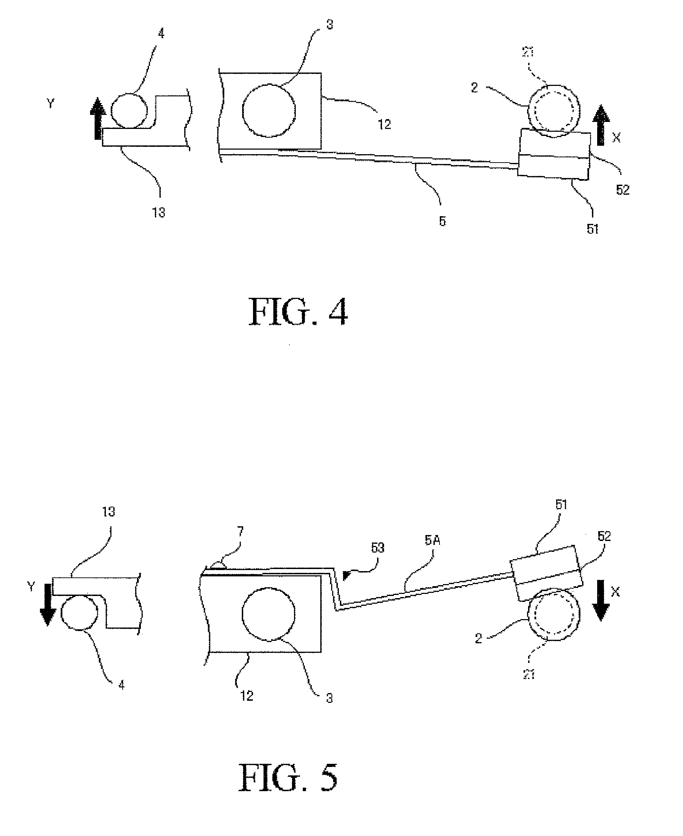

In the optical pick-up unit having the above structure, if the second end portion of the pick-up base is configured so that it is simply in abutment on the sub guide rod or a part of the base frame without providing any means that pushes the second end portion against the sub guide rod or the part of the base frame, the second end portion of the pick-up base is displaced or rattled in up and down even when small vibration or impact is added to the pick-up base. This means that the optical pick-up is also vibrated and thereby there is a possibility that an error is caused when data is read out from or recorded to an optical disc. In order to avoid such a problem, in the conventional optical disc drive disclosed in the above prior art, the second end portion of the pick-up base is formed into a structure having a C-shape cross section (which is vertical with respect to the moving direction of the optical pick-up) for slidably receiving the sub guide rod (see FIG. 5 of the publication). Further, there is also known other optical disc drive in which there is provided a spring for pushing a second end portion of a pick-up base onto a sub guide rod for preventing vibration of the second end portion of the pick-up base.

However, in the case of forming the second end portion into the structure having a C-shape cross section, there is a problem in that a dimensional accuracy is required for the sub guide rod. Further, in the case of additionally providing the spring, there is a problem in that a number of parts is increased. Therefore, in these approaches, there is a problem that a manufacturing cost cannot be reduced.

### SUMMARY OF THE INVENTION

Accordingly, it is an object of the present invention to provide an optical pick-up unit and an optical pick-up used in the optical pick-up unit that can prevent generation of vibration at a second end portion of a pick-up base without forming the second end portion into a structure having a C-shape cross section or providing any additional spring.

In order to achieve the object, the first aspect of the present invention is directed to an optical pick-up unit for use in an optical disc drive. The optical pick-up unit comprises: a base frame; a rotational drive mechanism provided on the base frame for rotating an optical disc loaded in the optical disc drive; an optical pick-up for reproducing data from or recording and reproducing data to and from the loaded optical disc, the optical pick-up being provided on the base frame so that the optical pick-up can move in a predetermined radial direction of the loaded optical disc, the optical pick-up including a pick-up base having a first end portion and a second end portion opposite to the first end portion and having an upper surface and a bottom surface; a stepping motor provided on the base frame; a lead screw rotated by the stepping motor and provided in parallel with the moving direction of the optical pick-up, the lead screw having a helical groove; first and second guide rods arranged on the base frame in parallel with the lead screw through a predetermined spacing for guiding the pick-up base of the optical pick-up in the moving direction of the optical pick-up; a rack spring having one end portion which is fixedly mounted on the pick-up base near the first end portion thereof by a fixing means and the other end portion which is provided with an engaging portion which is in engagement with the helical groove of the lead screw so as to move the pick-up base in the moving direction of the pick-up in accordance with the rotation of the lead screw; and an abutment portion provided at the second end portion of the pick-up base so as to abut on the second guide rod. In the optical pick-up unit described above, the rack spring is provided on the pick-up base so as to forcedly rotate the pick-up base about the first guide rod with a reaction force generated in the rack spring so that the abutment portion of the pick-up base abuts on the second guide rod with a predetermined load.

According to the optical pick-up unit of the present invention described above, it is possible to suppress up and down displacement (vibration) of the abutment portion at the second end portion of the pick-up base without forming the second end portion into a structure having a C-shape cross section for receiving the sub guide rod or providing any additional spring for pushing down the abutment portion against the sub guide rod.

In the optical pick-up unit of the present invention, it is preferred that the abutment portion is configured so as to abut on the second guide rod from the upper side of the second guide rod and the rack spring is mounted on the upper surface of the pick-up base.

Further, in the optical pick-up unit of the present invention, it is also preferred that the abutment portion is configured so as to abut on the second guide rod from the lower side of the second guide rod and the rack spring is mounted on the bottom surface of the pick-up base.

Furthermore, in the optical pick-up unit of the present invention, it is also preferred that the rack spring is formed with an aperture for changing a spring constant at a position between the fixing means and the engaging portion.

Furthermore, in the optical pick-up unit of the present invention, it is also preferred that the rack spring has a step portion between the fixing means and the engaging portion.

Furthermore, in the optical pick-up unit of the present invention, it is also preferred that the optical pick-up includes an objective lens at a substantially central portion thereof, in which the rack spring is fixedly mounted to the pick-up base by the fixing means at a position shifted to the side of the objective lens from the main guide rod.

Moreover, in the optical pick-up unit of the present invention, it is also preferred that the rack spring is configured so that the engaging portion thereof is in engagement with the of the lead screw in a state that a predetermined load is applied onto the lead screw to generate the reaction force of the rack spring.

Another aspect of the present invention is directed to an optical pick-up unit for use in an optical disc drive. The optical pick-up unit comprises: a base frame having a longitudinal side portion; a rotational drive mechanism provided on the base frame for rotating an optical disc loaded in the optical disc drive; an optical pick-up for reproducing data from or recording and reproducing data to and from the loaded optical disc, the optical pick-up being provided on the base frame so that the optical pick-up can move in a predetermined radial direction of the loaded optical disc, the optical pick-up including a pick-up base having a first end portion and a second end portion opposite to the first end portion and having an upper surface and a bottom surface; a stepping motor provided on the base frame; a lead screw rotated by the stepping motor and provided in parallel with the moving direction of the optical pick-up, the lead screw having a helical groove; a guide rod arranged on the base frame in parallel with the lead screw through a predetermined spacing therebetween for guiding the pick-up base of the optical pick-up in the moving direction of the optical pick-up; a rack spring having one end which is fixedly mounted on the pick-up base by a fixing means and the other end which is provided with an engaging portion which is in engagement with the helical groove of the lead screw so as to move the pick-up base in the moving direction of the pick-up in accordance with the rotation of the lead screw; and an abutment portion provided at the second end portion of the pick-up base so as to abut on the part of the base frame. In the optical pick-up unit described above, the rack spring is provided on the pick-up base so as to forcedly rotate the pick-up base about the first guide rod with a reaction force generated in the rack spring so that the abutment portion of the pick-up base abuts on the part of the base frame with a predetermined load.

According to the optical pick-up unit of this aspect of the present invention described above, it is possible to suppress up and down displacement (vibration) of the abutment portion at the second end portion of the pick-up base without forming the second end portion into a structure having a C-shape cross section for receiving a part of the base frame or providing any additional spring for pushing down the abutment portion 13 against the part of the base frame.

Still another aspect of the present invention is directed to an optical pick-up for use in an optical pick-up unit provided in an optical disc drive. The optical pick-up unit comprises: a base frame having a longitudinal side portion; a rotational drive mechanism provided on the base frame for rotating an optical disc loaded in the optical disc drive; an optical pick-up for reproducing data from or recording and reproducing data to and from the loaded optical disc, the optical pick-up being provided on the base frame so that the optical pick-up can move in a predetermined radial direction of the loaded optical disc, the optical pick-up including a pick-up base having a first end portion and a second end portion opposite to the first end portion and having an upper surface and a bottom surface; a stepping motor provided on the base frame; a lead screw rotated by the stepping motor and provided in parallel with the moving direction of the optical pick-up, the lead screw having a helical groove; first and second guide rods arranged on the base frame in parallel with the lead screw through a predetermined spacing for guiding the pick-up base of the optical pick-up in the moving direction of the optical pick-up; a rack spring having one end is fixedly mounted on the pick-up base by a fixing means and the other end which is provided with an engaging portion which is in engagement with the helical groove of the lead screw so as to move the pick-up base in the moving direction of the pick-up in accordance with the rotation of the lead screw; and an abutment portion provided at the second end portion of the pick-up base so as to abut on the second guide rod. In the optical pick-up described above, the rack spring is provided on the pick-up base of the optical pick-up so as to forcedly rotate the pick-up base about the first guide rod with a reaction force generated in the rack spring so that the abutment portion of the pick-up base abuts on the second guide rod with a predetermined load.

In the optical pick-up as described above, it is also preferred that the rack spring is configured so that the optical pick-up unit does not have the second guide rod, and the base frame has a longitudinal side portion, wherein the longitudinal side portion is used instead of the second guide rod.

The above and other objects, features and advantages of the present invention will be apparent from the following description when taken in conjunction with the accompanying drawings which illustrate preferred embodiments of the present invention by way of example.

### BRIEF DESCRPTION OF THE DRAWINGS

FIG. 1 is a plan view which shows an optical pick-up unit of a first embodiment according to the present invention.

FIG. 2 is a plan view which shows a main portion of then optical pick-up unit of the first embodiment according to the present invention.

FIG. 3 is a cross-sectional view of a main part of the optical pick-up unit shown in FIG. 2.

FIG. 4 is a cross-sectional view of a main part of the optical pick-up unit of a second embodiment according to the present invention.

FIG. 5 is a cross-sectional view of a main part of the optical pick-up unit of a third embodiment according to the present invention.

### DETAILED DESCRPTION OF THE PREFERRED EMBODIMENTS

Hereinafter, an optical pick-up unit and an optical pick-up used in the optical pick-up unit according to the present invention will be described in detail with reference to preferred embodiments illustrated in the accompanying drawings.

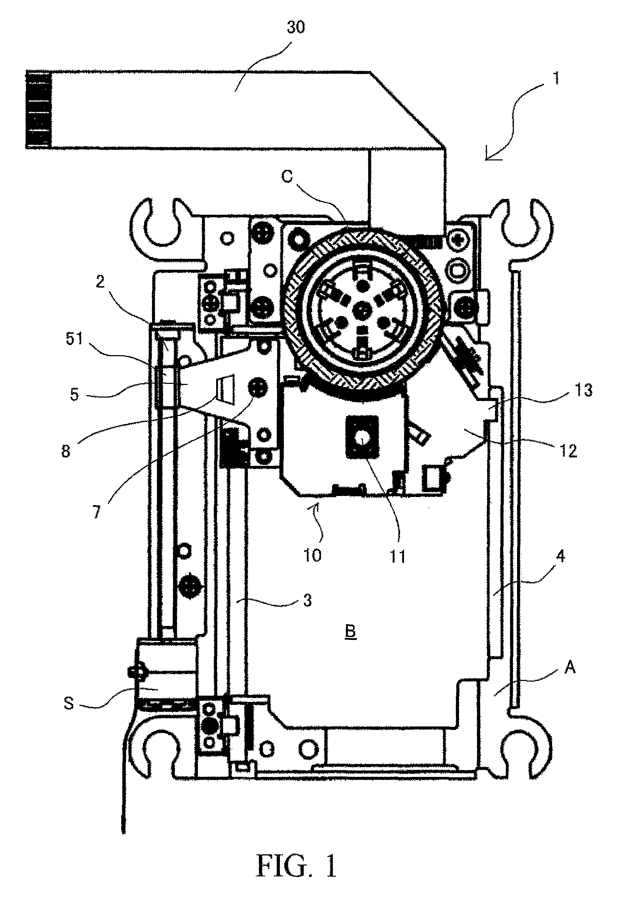

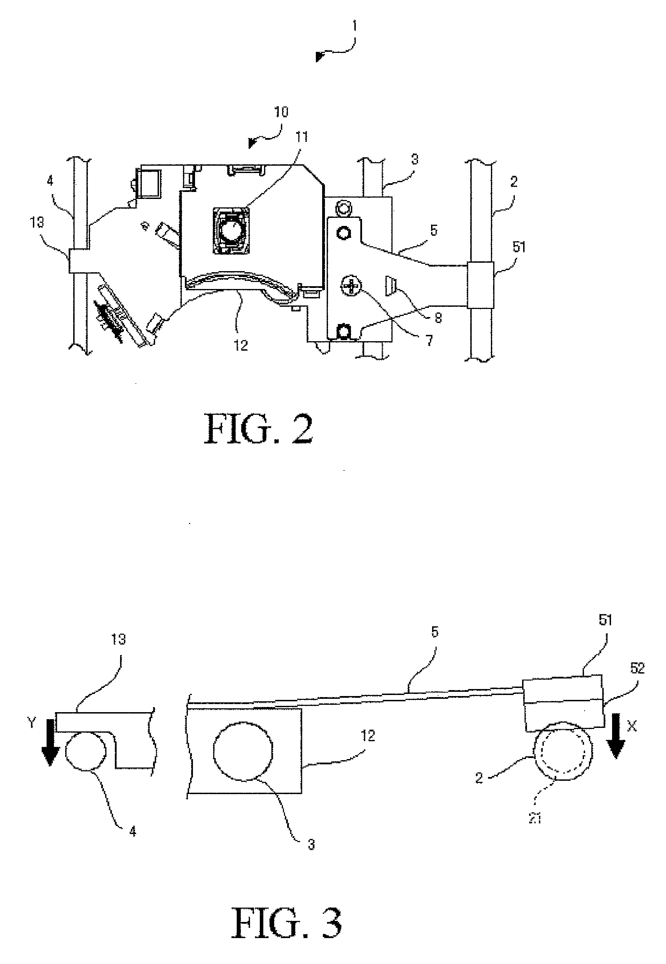

First, description will be made with regard to the structure of the optical pick-up unit according to the present invention. In this regard, FIG. 1 is a plan view which shows an optical pick-up unit of a first embodiment according to the present invention, FIG. 2 is a plan view which shows a main portion of the optical pick-up unit shown in FIG. 1, and FIG. 3 is a cross-sectional view of a main part of the optical pick-up shown in FIG. 2.

The optical pick-up unit 1 of the present invention is used in an optical disc drive for reproducing data from or recording and reproducing data to and from an optical disc (not shown in the drawings) such as CD-ROM, CD-R, DVD-ROM, DVD-R and the like. On occasion, the optical pick-up unit 1 is also called as a traverse mechanism, and used by mounting on a chassis of an optical disc drive (not shown in the drawing). The chassis is configured so as to be displaceable between a raised position in which a loaded optical disc can be reproduced and/or recorded and a lowered position in which the optical disc can be ejected and an optical disc can be loaded.

As shown in FIG. 1, the optical pick-up unit 1 includes a base frame A formed into a substantially rectangular frame having a substantially rectangular opening B therein. Each of the four corner potions of the base frame A is formed into a C-shaped notch, and the base frame A is mounted on the chassis through elastic coupling bodies (not shown in the drawing) attached to the four C-shaped notches.

The optical pick-up unit 1 further includes a rotational driving mechanism (including a spindle motor (not shown in the drawing) and a turn table C on which a loaded optical disc is to be supported for rotating the optical disc, and an optical pick-up 10 for reproducing data from or recording and reproducing data to and from a loaded optical disc by moving a predetermined radial direction of the optical disc.

The optical pick-up unit 1 further includes a stepping motor S provided on the base frame A and a lead screw 2 of which base end is coupled to the stepping motor S. The lead screw 2 is provided in parallel with the predetermined moving direction of the optical pick-up 10 (in the up and down direction in FIG. 1).

The optical pick-up 10 includes a pick-up base 12 having a first end portion near the lead screw 2 and a second end portion far from the lead screw 2 and located at the opposite side of the first end portion of the pick-up base 12. The second end portion of the pick-up base 12 constitutes a sub rod portion 13 of the pick-up base 12.

The optical pick-up unit 1 further includes first and second guide rods 3, 4 (main guide rod 3 and sub guide rod 4) which are arranged in parallel with the lead screw 2, and the main guide rod 3 and the sub guide rod 4 are arranged with a predetermined spacing therebetween for guiding the pick-up base 12 of the optical pick-up 10 in the predetermined moving direction of the optical pick-up 10. The main guide rod 3 is arranged near the lead screw 2 so as to pass through the first end portion of the pick-up base 12 and the sub guide rod 4 is arranged at a position that can abut on the second end portion 13 of the pick-up base 12 of the optical pick-up 10.

The optical pick-up unit 1 (the optical pick-up 10) further includes a rack spring 5. The rack spring 5 is at one end portion (base end portion) thereof fixedly mounted on the upper surface of the pick-up base 12 near the first end portion thereof. The rack spring 5 has at the other end thereof an engaging portion (rack) 51 which is to be engaged with the engaging groove of the lead screw 2. By rotating the lead screw 2 with the stepping motor S in a state that the engaging portion 51 of the rack spring 5 is in engagement with the engaging groove of the lead screw 2, it is possible to move the optical pick-up 10 in the predetermined radial direction of the optical disc.

Furthermore, in FIG. 1, the reference numeral 30 denotes a flexible printed circuit board for transmitting and receiving various signals which are required for operating the optical pick-up unit 1.

As shown in FIG. 2, the optical pick-up 10 includes an objective lens at a substantially central portion thereof when viewed from the top thereof.

As stated in the above, the sub rod portion 13 is configured into a structure that abuts on the sub guide rod 13 from the upper side thereof in a substantially vertical direction with a predetermined load. Hereinbelow, description will be made with regard to the pick-up 10 having the sub rod portion 13 described above.

In this first embodiment, the sub rod portion 13 is referred to an abutment portion 13 since it is in abutment with the sub guide rod 4. However, the abutment portion 13 may be configured so as to abut on a part of the base frame A (that is, a part of a longitudinal side potion of the base frame A) instead of the sub guide rod. In other words, a part of a longitudinal side potion of the base frame A on the side of the second guide rod can be used instead of the sub guide rod the. It should be noted that this modified structure can obtain the same result as that of the present embodiment using the first and second guide rods.

The rack spring 5 is pushed against the lead screw 2 with a predetermined load (spring pressure) so that an engagement portion 52 of the rack 51 is in engagement with the groove of the lead screw 2. In this regard, an abutment potion (not shown in the drawing) that abuts on the lower side of the lead screw 2 and extends from the pick-up base 12 may be additionally provided. Further, as shown in FIG. 1, the lead screw 2 is rotatably supported on the base frame A and the base end of the lead screw is coupled to the stepping motor S.

When the stepping motor S rotates, the lead screw 2 is also rotated. When the lead screw 2 is rotated, the engagement portion 52 of the rack 51 is moved along the groove 21 of the lead screw 2. According to the movement of the engagement portion 52 of the rack 51, the pick-up base 12 is moved with being guided along the main guide rod 3 and the sub guide rod 4 (or a part of the longitudinal side portion of the base frame A) thereby the optical pick-up 10 is moved in the predetermined radial direction.

As shown in Fig. 3, in the optical pick-up unit 1 of the present invention, when the load is applied onto the lead screw 2 by the rack 51 of the rack spring 5 as indicated by the arrow "X" , that is, the rack 51 of the rack spring is biased or urged against the lead screw 2, a reaction force is generated in the rack spring 5 and this reaction force is applied to the pick-up base 12 (first end portion of the pick-up base 12) at the base end portion of the rack spring 5 through the fixing means 7. As a result, the pick-up base is forcedly rotated about the first guide rod with the reaction force of the rack spring so that the abutment portion of the pick-up base abuts on the second guide rod with a predetermined load. Consequently, a downward force indicated by the arrow "Y" is exerted at the opposite side (second end portion) of the pick-up base 12 in a state that the main guide road 3 is used as a rotation axis. In other words, a downward force "Y" is exerted in the abutment portion 13 provided at the opposite side (second end portion) of the pick-up base 12 by the reaction force of the rack spring 5, the abutment portion 13 is pushed down against the sub guide rod 4 (or a part of the base frame A) with a predetermined load.

As described above, in the optical pick-up unit 1 of the present invention, the rack spring 5 is provided so as to forcedly rotate the pick-up base about the main guide rod 3 so that the abutment portion 13 of the pick-up base 12 abuts on the sub guide rod 4 with a state that the downward force "Y" (a predetermined load) is exerted. With this result, according to the optical pick-up unit 1 of the present invention, it is possible to suppress up and down displacement (vibration) of the abutment portion 13 at the second end portion of the pick-up base 12 without forming the second end portion into a structure having a C-shape cross section for receiving the sub guide rod 4 or a part of the base frame A or providing any additional spring for pushing down the abutment portion 13 against the sub guide rod 4 or the part of the base frame A.

In this regard, it should be noted that in the above embodiment, if the fixing means 7 for fixedly mounting the rack spring 5 to the pick-up base 12 is provided above the main guide rod 4, it is not possible to apply the reaction force of the rack spring 5 to the side of the abutment portion 13 . Therefore, in this embodiment, as shown in FIG. 1, the rack spring 5 is fixedly mounted to the pick-up base 12 by the fixing means 7 at a position shifted to the side of the objective lens 11 from the main guide rod 3. By adjusting the mounting position of the fixing means 7 with respect to the pick-up base 12, it is possible to adjust a pushing force (downward force "Y") of the abutment portion 13 against the sub guide rod 4.

Further, in this embodiment, the rack spring 5 is formed with an aperture for changing a spring constant of the rack spring 5 at a position between the fixing means 7 and the rack 51. By forming such an aperture 8 in the rack spring 5, it is possible to lower the spring constant of the rack spring 5. In this case, it should be avoided to form such an aperture in a narrow width portion of the rack spring 5 (e.g. a portion of the rack spring 5 near the rack 51). This is because if the aperture 8 is formed in such a narrow width portion of the rack spring 5, there is a fear that the rack spring 5 is twisted at that portion when an large stress is applied thereto). Further, in the case where the spring constant of the rack spring 5 has been set appropriately, it is not necessary to form such an aperture 8 in the rack spring 5.

Next, description will be made with regard to the second embodiment of the optical pick-up unit 1 according to the present invention.

FIG. 4 is a cross-sectional view of a main part of the optical pick-up unit 1 of a second embodiment according to the present invention, and FIG. 5 is a cross-sectional view of a main part of the optical pick-up unit 1 of a third embodiment according to the present invention.

As shown in FIG. 4, in the optical pick-up unit 1 of the second embodiment, a direction from which a load is applied to the lead screw 2 is reversed from the first embodiment described above. That is to say, in this second embodiment, the rack spring 5 is fixedly mounted on the bottom surface of the pick-up base 12 and the rack 51 are configured so that the engagement portion 52 of the rack 51 abuts against the lead screw 2 from the lower side thereof with a predetermined load indicated by the arrow "X" . In this modification, the reaction force of the rack spring 5 is exerted as an upward force indicated by the arrow "Y" at the opposite end (the second end portion) of the pick-up base 12 in a state that the main guide road 3 is used as a rotation axis. Therefore, different from the first embodiment, in this second embodiment, the abutment portion 13 is provided upper side of the pick-up base 12 so that its lower surface constitutes an abutment surface against the sub guide rod 4.

As a result, the reaction force of the rack spring 5 is exerted against the sub guide rod 4 as an upward force "Y" through the abutment portion 13. According to this modified configuration, it is possible to obtain the same result as that of the first embodiment. In this connection, it is to be noted that in the case of this modified configuration, the rack spring 5 is also fixedly mounted to the pick-up base 12 by the fixing means (not shown) at a position shifted to the side of the objective lens 11 from the main guide rod 3 due to the same reason as discussed with reference to the first embodiment shown in FIG. 3.

Next, referring to FIG. 5, description will be made with regard to the third embodiment of the optical pick-up unit 1 according to the present invention.

As shown in FIG. 5, the third embodiment uses a rack spring 5A which has a step 53 between the fixing means 7 and the rack 51. In the case where such a rack spring 5A having the above configuration is used, it is also possible to obtain the same result as that of the first and second embodiment so long as the reaction force of the rack spring 5 is exerted against the sub guide rod 4 through the abutment portion 13 as a downward force indicated by the arrow "Y".

In this connection, it is to be noted that in the case where the rack spring 5A having the above configuration is used, it is not necessary to provide not so large height difference between the height of the lead screw 2 and the height of the main guide rod 3 and the sub guide rod 4, it is possible to make the size of the optical pick-up 1 in its height direction relatively small. In this connection, it is to be noted that in the case of this modified configuration, the rack spring 5A is also fixedly mounted on the upper surface of the pick-up base 12 by the fixing means 7 at a position shifted to the side of the objective lens 11 from the main guide rod 5 as is the same with the first embodiment shown in FIG. 3.

Further, according to the third embodiment shown in FIG. 5, since the rack spring 5A is not required to have so high dimensional accuracy due to the provision of the step 53, and thus it is possible to have any clearance in its structure, for example, between the step 53 and the pick-up base 12. Therefore, this third embodiment has an advantage in that there is less possibility that the rack spring 5 is deformed over its limit when a large impact is added in a direction opposite to the direction from which a load is applied due to drop of the optical disc drive or the like.

Finally, it should be understood that the present invention is not limited to the preferred embodiments described hereinabove and, needless to say, a variety of modifications or variations may be made without departing from the scope of the invention defined in the following claims.

Further, it is also to be understood that the present disclosure relates to subject matter contained in Japanese Patent Application No. 2006-356911 (filed on December 29, 2006) which is expressly incorporated herein by reference in its entirety.

## Claims

1. An optical pick-up unit for use in an optical disc drive, comprising:
a base frame;
a rotational drive mechanism provided on the base frame for rotating an optical disc loaded in the optical disc drive;
an optical pick-up for reproducing data from or recording and reproducing data to and from the loaded optical disc, the optical pick-up being provided on the base frame so that the optical pick-up can move in a predetermined radial direction of the loaded optical disc, the optical pick-up including a pick-up base having a first end portion and a second end portion opposite to the first end portion and having an upper surface and a bottom surface;
a stepping motor provided on the base frame;
a lead screw rotated by the stepping motor and provided in parallel with the moving direction of the optical pick-up, the lead screw having a helical groove;
first and second guide rods arranged on the base frame in parallel with the lead screw through a predetermined spacing for guiding the pick-up base of the optical pick-up in the moving direction of the optical pick-up;
a rack spring having one end portion which is fixedly mounted on the pick-up base near the first end portion thereof by a fixing means and the other end portion which is provided with an engaging portion which is in engagement with the helical groove of the lead screw so as to move the pick-up base in the moving direction of the pick-up in accordance with the rotation of the lead screw; and
an abutment portion provided at the second end portion of the pick-up base so as to abut on the second guide rod,
wherein the rack spring is provided on the pick-up base so as to forcedly rotate the pick-up base about the first guide rod with a reaction force generated in the rack spring so that the abutment portion of the pick-up base abuts on the second guide rod with a predetermined load.

2. The optical pick-up unit as claimed in claim 1, wherein the abutment portion is configured so as to abut on the second guide rod from the upper side of the second guide rod and the rack spring is mounted on the upper surface of the pick-up base.

3. The optical pick-up unit as claimed in claim 1, wherein the abutment portion is configured so as to abut on the second guide rod from the lower side of the second guide rod and the rack spring is mounted on the bottom surface of the pick-up base.

4. The optical pick-up unit as claimed in claim 1, wherein the rack spring is formed with an aperture for changing a spring constant at a position between the fixing means and the engaging portion.

5. The optical pick-up unit as claimed in claim 1, wherein the rack spring has a step portion between the fixing means and the engaging portion.

6. The optical pick-up unit as claimed in claim 1, wherein the optical pick-up includes an objective lens at a substantially central portion thereof, in which the rack spring is fixedly mounted to the pick-up base by the fixing means at a position shifted to the side of the objective lens from the main guide rod.

7. The optical pick-up unit as claimed in claim 1, wherein the rack spring is configured so that the engaging portion thereof is in engagement with the of the lead screw in a state that a predetermined load is applied onto the lead screw to generate the reaction force of the rack spring.

8. An optical pick-up unit for use in an optical disc drive, comprising:
a base frame having a longitudinal side portion;
a rotational drive mechanism provided on the base frame for rotating an optical disc loaded in the optical disc drive;
an optical pick-up for reproducing data from or recording and reproducing data to and from the loaded optical disc, the optical pick-up being provided on the base frame so that the optical pick-up can move in a predetermined radial direction of the loaded optical disc, the optical pick-up including a pick-up base having a first end portion and a second end portion opposite to the first end portion and having an upper surface and a bottom surface;
a stepping motor provided on the base frame;
a lead screw rotated by the stepping motor and provided in parallel with the moving direction of the optical pick-up, the lead screw having a helical groove;
a guide rod arranged on the base frame in parallel with the lead screw through a predetermined spacing therebetween for guiding the pick-up base of the optical pick-up in the moving direction of the optical pick-up;
a rack spring having one end which is fixedly mounted on the pick-up base by a fixing means and the other end which is provided with an engaging portion which is in engagement with the helical groove of the lead screw so as to move the pick-up base in the moving direction of the pick-up in accordance with the rotation of the lead screw; and
an abutment portion provided at the second end portion of the pick-up base so as to abut on the part of the base frame,
wherein the rack spring is provided on the pick-up base so as to forcedly rotate the pick-up base about the first guide rod with a reaction force generated in the rack spring so that the abutment portion of the pick-up base abuts on the part of the base frame with a predetermined load.

9. An optical pick-up for use in an optical pick-up unit provided in an optical disc drive, in which the optical pick-up unit comprising: a base frame having a longitudinal side portion; a rotational drive mechanism provided on the base frame for rotating an optical disc loaded in the optical disc drive; an optical pick-up for reproducing data from or recording and reproducing data to and from the loaded optical disc, the optical pick-up being provided on the base frame so that the optical pick-up can move in a predetermined radial direction of the loaded optical disc, the optical pick-up including a pick-up base having a first end portion and a second end.portion opposite to the first end portion and having an upper surface and a bottom surface; a stepping motor provided on the base frame; a lead screw rotated by the stepping motor and provided in parallel with the moving direction of the optical pick-up, the lead screw having a helical groove; first and second guide rods arranged on the base frame in parallel with the lead screw through a predetermined spacing for guiding the pick-up base of the optical pick-up in the moving direction of the optical pick-up; a rack spring having one end is fixedly mounted on the pick-up base by a fixing means and the other end which is provided with an engaging portion which is in engagement with the helical groove of the lead screw so as to move the pick-up base in the moving direction of the pick-up in accordance with the rotation of the lead screw; and an abutment portion provided at the second end portion of the pick-up base so as to abut on the second guide rod,
wherein the rack spring is provided on the pick-up base of the optical pick-up so as to forcedly rotate the pick-up base about the first guide rod with a reaction force generated in the rack spring so that the abutment portion of the pick-up base abuts on the second guide rod with a predetermined load.

10. The optical pick-up as claimed in claim 9, wherein the optical pick-up unit does not have the second guide rod, and the base frame has a longitudinal side portion, wherein the longitudinal side portion is used instead of the second guide rod.
